Europäisches Patentamt

European Patent Office

Office européen des brevets

(19)

(11) Publication number: **0 084 908**
**B1**

# EUROPEAN PATENT SPECIFICATION

(12)

(45) Date of publication of patent specification: **07.08.85**

(51) Int. Cl.⁴: **H 04 N 9/04**

(21) Application number: **83200074.9**

(22) Date of filing: **19.01.83**

(54) Setting-up system for a television camera.

(30) Priority: **22.01.82 NL 8200234**

(43) Date of publication of application:
**03.08.83 Bulletin 83/31**

(45) Publication of the grant of the patent:
**07.08.85 Bulletin 85/32**

(84) Designated Contracting States:
**DE FR GB**

(56) References cited:
**EP-A-0 084 195**
**US-A-4 285 004**

(73) Proprietor: **N.V. Philips' Gloeilampenfabrieken**
**Groenewoudseweg 1**
**NL-5621 BA Eindhoven (NL)**

(72) Inventor: **Van Roessel, Frederik Johannes**
**c/o INT. OCTROOIBUREAU B.V. Prof. Holstlaan 6**
**NL-5656 AA Eindhoven (NL)**

(74) Representative: **Steenken, Jacob Eduard et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a setting-up system for a television camera, the system comprising a signal source incorporating a television pick-up device for producing at least one video signal, also comprising a signal processing circuit and a subsequent digital error measuring circuit for determining in association with a microcomputer error values between the average value of a signal applied thereto taken over distinct sub-areas of a television picture and a reference value, the microcomputer comprising at least one digital store having separate store locations for storing digital correction values corresponding to minimal error values and being associated with the sub-areas, and a signal correction circuit for effecting, while digital correction values are applied, a signal correction resulting in a video signal corrected for each sub-area.

Such a camera setting-up system is disclosed in United States Patent 4,285,004. Said Patent describes that at the camera, which is suitable for colour television and comprises a pick-up device for producing three colour signals, corrections are effected to obtain a good registration of the three colour pictures on display and to correct shading errors at black level and peak white value. In addition, a gamma correction and a focusing correction can be effected. Depending on the type of the correction the signal correction circuit applies the correction signal to the pick-up arrangement (for scanning and focusing correction) or to a video signal processing circuit (for shading and gamma correction). To obtain the different types of correction signals the error measuring circuit incorporates as many error measuring channels as there are types of correction signals and a reference channel, one of the three colour signals being selectively applied to these error measuring channels *via* a change-over switch.

The invention has for its object to provide a television camera setting-up system in which corrections of a different type can be obtained with the least possible number of circuit components.

According to the invention, a setting-up system is characterized in that the signal processing circuit which precedes the digital error measuring circuit incorporates a plurality of parallel channels each having a different, analogue, signal transfer characteristic, these parallel channels being selectively connected *via* a change-over switch to the digital error measuring circuit which incorporates a digital error measuring channel which is common to the parallel channels.

The invention is based on the recognition that to obtain the simplest possible construction of the setting-up system operating with the said sub-areas, the most advantageous line of action is to provide the digital error measuring circuit with a single, common digital error measuring channel and to process the signal to be measured in such an analogue manner in the relevant parallel channel that the measured error value is characteristic of the type of the correction to be performed.

It is noted that the non-prepublished European Patent Application No. 0 084 195 describes a method for the automatic setting-up of a television camera by means of a microcomputer. Such setting-up is effected in two separate steps, a test pattern being used in each step, an external test pattern being present on a test chart in front of the camera and an internal test pattern being present in the camera in the optical path between a camera lens system and a camera pick-up arrangement. During setting-up with the internal test pattern which is obtained by means of a light source, the lens system is optically blocked and correction information is stored in a memory. During or after setting-up with the external test pattern the correction information associated with the internal test pattern is subtracted from the correction information associated with the external test pattern. The resulting correction difference information belongs as a correction information to the lens system and is stored in a memory associated with the lens system. Any setting-up to be effected thereafter by a camera operator and which is part of the preparation for scene recording can now be effected, without external test chart pattern, with the internal test pattern, the camera memory and the lens memory together producing the corrections for an optimum setting-up.

A setting-up system in accordance with the invention, suitable for a colour television camera, the setting-up relating to raster registration correction for television line rasters, between a reference raster corresponding to a reference signal and a raster corresponding to a camera video signal, for which purpose a difference signal which represents the difference between the reference signal and the video signal is adjusted to a minimum, is characterized in that the parallel channel suitable for that purpose in the signal processing circuit has a transfer characteristic which is determined by a signal differentiating circuit which during line scanning periods is switched-on by means of a switch provided therein and is switched off during line blanking periods, and by a subsequent rectifier circuit.

A further, practical embodiment is characterized in that the time constant of the signal differentiating circuit corresponds to a plurality of line periods.

To effect a further correction, a setting-up system in accordance with the invention is characterized in that for effecting a focusing correction the parallel channel suitable for that purpose in the signal processing circuit has a transfer characteristic which is determined by a high-pass filter and by a subsequent rectifier circuit.

A further, practical embodiment is characterized in that the high-pass filter has a 12 dB-per-octave-filter characteristic.

To effect another correction, a setting-up system in accordance with the invention, suitable for a colour television camera, is characterized in that to obtain a minimal presence of a chrominance subcarrier wave in a luminance signal the parallel channel suitable for a measurement thereof incorporated in the signal processing circuit has a transfer characteristic which is determined by a bandpass filter tuned to the chrominance subcarrier frequency and by a subsequent rectifier circuit.

To obtain an increased amount of measuring information a setting-up system in accordance with the invention is further characterized in that the said rectifier circuit is a full-wave rectifier circuit.

To effect a still further correction a setting-up system in accordance with the invention is characterized in that for effecting a measurement at a video signal level to be selected the parallel channel suitable for that purpose in the signal processing circuit has a transfer characteristic which is determined by a threshold-limiter circuit.

A further embodiment is characterized in that the threshold-limiter circuit comprises a pulse generator having an input to which the video signal to be measured is applied and an output for supplying pulses when the instantaneous video signal value has a certain offset from the selected level, the output being connected to an input of an adder circuit having a further input to which the video signal is applied and an output which is connected to an input of a half-wave rectifier circuit the output of which for carrying a suppressed video signal during the pulses is connected to the digital error measuring channel.

A still further embodiment is characterized in that the pulse generator incorporates two voltage comparison circuits, each having a first and a second output, a first and a second input to which respective voltages to be compared are applied and a third and a fourth input to which voltages may be applied which block the voltage comparison circuit(s) between the first and second inputs and the first and second outputs, respectively, a first or a second input, respectively of each voltage comparison circuit being coupled to the said input of the pulse generator and the remaining inputs to the microcomputer whilst the outputs of the voltage comparison circuits are coupled to each other *via* diodes which are separately biased for each voltage comparison circuit and coupled to the input of the rectifier circuit *via* a further diode incorporated in the adder circuit.

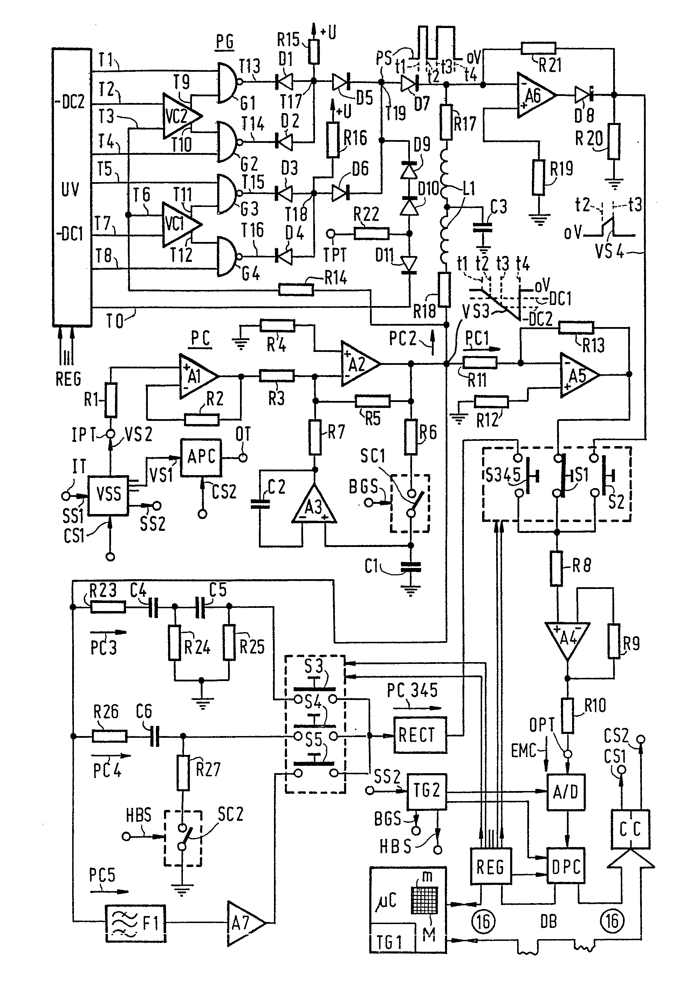

The invention will now be further described by way of example of a television camera setting-up system with reference to the accompanying drawing.

In the drawing a video signal source is denoted by VSS. The video signal source VSS comprises a television pick-up device, not shown, which is suitable for black-white television or colour television. A composite synchronizing signal SS1 is applied to an input terminal IT of the source VSS, this source producing one or more video signals intended for picture display, one of which is denoted by VS1. The video signal VS1 intended for picture display is applied to an analogue signal processing circuit APC an output of which is connected to an output terminal OT. Correction signal CS1 and CS2 are respectively applied to the source VSS and to the circuit APC from a signal correction circuit CC. The correction signal CS1 produces in, for example, a colour televison pick-up device a raster registration correction. For black-white and colour television the correction signal CS1 might provide an optical or electronic focusing correction at the pick-up device incorporated in the source VSS. The correction signal CS2 may produce, for example, a shading correction or a gamma correction for black-white or colour television or a chrominance subcarrier suppression in a luminance signal for colour television. In the first instance, which type of correction is effected at the video signal source VSS and/or the analogue video signal processing circuit APC is not defined. Let it be assumed that after an optimum camera setting-up the circuit APC supplies from the output terminal OT a video signal for optimum picture display.

For the supply of the correction signals CS1 and CS2 the correction circuit CC is connected to a data bus DB having, for example, 16 lines. Connected to the data bus DB there are a microcomputer μC, a register REG and a digital signal processing circuit DPC; further components connected to the data bus DB are not shown. At the microcomputer μC it is shown that it incorporates a timing signal generator TG1 and a memory M having separate memory locations *m*. At the circuit DPC it is shown that a signal input is connected to an output of an analog-to-digital converter A/D, that a control input is connected to an output of a timing signal generator TG2 and an enable input is connected to an output of the register REG. A clock pulse input of the converter A/D is connected to an output terminal of the timing signal generator TG2, a signal input of the converter A/D being connected to an output terminal OPT of a signal processing circuit PC in accordance with the invention, which will be described hereinafter and has an input terminal IPT connected to an output of the signal source VSS, this output carrying a signal VS2. For synchronizing purposes a synchronizing signal SS2 is applied from the source VSS to the timing signal generator TG2, which further supplies a line blanking signal HBS and, with colour television, a chrominance subcarrier burst gate signal BGS, outside field blanking periods. The analog-to-digital converter A/D and the digital signal processing circuit DPC form a digital error measuring channel EMC which, in association with the microcomputer μC ensures that the correct correction information is applied to the signal correction circuit CC *via* an error measuring circuit (A/D, DPC, TG2, REG). After setting-up M correction values each associated with a corresponding sub-area of a television picture are stored in the separate memory locations *m* of the digital memory M. With the described construction, a memory M may be provided in the microcomputer µC for each type of correction. For a detailed, possible construction of the circuit DPC and a description of its operation in association with the microcomputer µC reference is made to the non-prepublished European Patent Application No. 0 083 128, for a possible construction of an optimum linearly operating analog-to-digital converter A/D referene being made to the non-prepublished European Patent Application No. 0 080 231.

For the present invention the detailed construction of the error measuring channel EMC and the cooperation with the microcomputer µC is of secondary importance. It is essential that there is one single digital error measuring channel EMC which is connected to the output terminal OPT of the signal processing circuit PC in accordance with the invention.

The signal VS2 is applied to the input terminal IPT of the circuit PC. The signal VS2 may be a black-white or colour television video signal. For colour television the signal VS2 may be a single colour signal or a luminance signal, or a difference signal between two colour signals. The choice of the type of the signal VS2 depends on the type of correction to be effected during the setting-up. In accordance with one aspect of the invention the circuit PC comprises a number of selective parallel channels, designated PC1, PC2, PC3, PC4 and PC5, the channel selection being associated with a specific, analogue transfer characteristic and the signal type selection of the signal VS2. The separate channels PC3, PC4 and PC5 are followed by a common channel PC 345. Anticipating the detailed description of the parallel channels PC1 to PC5, inclusive to be selected, each having a specific, analogue transfer characteristic, it is mentioned that, for a selected channel PC1, PC2, PC3 or PC5 the signal VS2 is a video signal which varies between, for example, black level and peak white value. The channel PC5 being chosen, the video signal VS2 is a luminance signal for colour television, as *via* this channel a chrominance subcarrier measurement is effected. It will be seen that a focusing correction for black-white or colour television can be effected *via* the channel PC3, it being possible to measure selectively *via* the channel PC2 the video signal above, below and between adjustable threshold values for effecting a gamma or shading correction and it being possible to measure *via* the channel PC1 the average video signal value for effecting, for example, a shading correction. Channel PC4 being selected, the difference signal between two colour signals or between a colour signal and a reference signal is measured for effecting a raster registration correction.

In the signal processing circuit PC a common portion comprising differential amplifiers A1, A2 and A3 precedes the parallel channels PC1 to PC5, inclusive. The input terminal IPT is connected to the (+) input of the amplifier A1 *via* a resistor R1. The output of the amplifier A1 is connected *via* a resistor R2 to its (−) input and *via* a resistor R3 to the (−) input of the amplifier A2, the (+) input of which is connected to ground *via* a resistor R4. The output of the amplifier A2 is connected *via* a resistor R5 to its (−) input and *via* a resistor R6 to a switch SC1. The switch SC1 among others is shown for the sake of simplicity as a mechanical switch, but in practice it is an electronic switch. For a periodic switching action a switching signal, such as, for example, the colour subcarrier burst gate signal BGS occurring for colour television outside the field blanking periods is applied to the switch SC1. Instead of the signal BGS a different line periodic, pulse-shaped switching signal may be used having switching pulses on the television back porch in line blanking periods. The resistor R6 is connected line-periodically, during (a portion of) the back porch in line blanking periods *via* the switch SC1 to a terminal of a capacitor C1 another terminal of which is connected to ground. The voltage-carrying terminal of the capacitor C1 is connected to the (+) input of the amplifier A3, the (−) input of which is connected to its output *via* a capacitor C2. The output of the amplifier A3 is connected to the (−) input of the amplifier A2 *via* a resistor R7. The common portion of the signal processing circuit PC preceding the parallel channels PC1 to PC5, respectively, is thus provided with a high-input impedance voltage follower (A1, R2) and a line-periodically active, keyed and fedback signal clamping circuit in which *inter alia* the amplifiers A2 and A3, the capacitors C1 and C2 and the switch SC1 are incorporated. The amplifier A2 produces a signal VS3 a possible variation of which is shown in the drawing as a function of the time. The signal VS3 is shown as a video signal having a linear, negatively-going variation during a line scan period between instants t1 and t4, a black level located on the OV ground potential being present in a preceding and a subsequent line blanking period. At the instant t4 the, for example, peak white value is present, t2 und t3 denoting preceding instants having less negative signal values −DC1 and −DC2.

The output of the amplifier A2 is connected to the parallel channels PC1 to PC5, respectively. One of these parallel channels can always be connected to the error measuring channel EMC, *via* switch S1, S2 or S345 and one of the further switches S3, S4 and S5. The switches S1, S2 and S345, which together with S3, S4 and S5 form a change-over switch (S1, S2, S345, S3, S4, S5) are operated from the register REG, under the control of the microcomputer µC. In addition, the register REG has outputs which are connected to inputs of a voltage source UV, which will be shown to form part of the parallel channel PC2.

Terminals of the switches S1, S2 and S345 are interconnected and connected to the (+) input of a differential amplifier A4 *via* a resistor R8. *Via* a resistor R9 and R10, respectively the output of the amplifier A4 is connected to its (−) input and to the output terminal OPT of the signal processing circuit PC, respectively which thus has a common high-impedance voltage follower (A4, R9) at the output.

For the parallel channel PC1 which in the drawing is selected by way of example it holds that the (−) input of a differential amplifier A5 incorporated therein is connected to the output of the amplifier A2 *via* a resistor R11. The (+) input of the amplifier A5 is connected to ground *via* a resistor R12 and its output is fed back to the (−) input *via* a resistor R13. The output of the amplifier A5 is connected to the (+) input of the voltage follower (A4, R9) *via* the closed switch S1 and the resistor R8. As a result of the described construction of the parallel channel PC1 this channel has a signal-inverting, linear transfer characteristic so that the signal VS3 applied to it becomes available at the output terminal OPT in the inverted form and possibly amplified, but non-processed in all further respects. When the digital signal processing circuit DPC has a construction as described in the above-mentioned patent application the average value of the (inverted) video signal VS3 is measured, more specifically always over seven line portions of the line scanning periods, during a number of these line scanning periods. As a result thereof a television picture is divided into rows of seven sub-areas, the average value of the local video signal being measured in each of these sub-areas. A comparison with a reference value and an elimination of the difference by means of correction values in the signal correction circuit CC (signal CS2) follows. When the applied video signal VS3 belongs to a uniformly illuminated television pick-up arrangement in the signal source VSS, the setting-up *via* the parallel channel PC1 results in a shading correction. In the memory locations *m* of the memory M or in a corresponding memory in the circuit CC, correction values are stored which, in the case of a uniform illumination, results in the signal VS3 having a constant value during line scanning periods.

For the parallel channel PC2 it is shown that when, for example, the shown signal VS3 is applied to it, it applies a signal VS4 derived therefrom to the switch S2. From the shown signal VS4 it can be seen that a threshold-limiter circuit is incorporated in the parallel channel PC2. A comparison of the signals VS3 and VS4 results in the parallel channel PC2 allowing the applied signal to pass between two threshold values −DC1 and −DC2 and that this parallel channel is blocked at less negative values (prior to the instant t2) and at more negative values (after the instant t3) during the line scanning period between the instants t1 and t4. As a result thereof the video signal contribution to the average value measurement in the error measuring channel EMC is only effected at video signal values located between the values −DC1 and −DC2. If the said reference value corresponds to a predetermined, desired gamma of the video signal VS3 the elimination of the difference therewith (correction signal CS2) results in the desired gamma being achieved during this adjustment. Shifting the threshold values −DC1 and −DC2 and/or changing the difference between them results in a correction which can be effected around every video signal level, in a desired signal amplitude band.

The drawing shows a possible construction of the parallel channel PC2 having the transfer characteristic determined by the threshold-limiter circuit. In the construction shown there are, in addition to the described threshold-limiter circuit active between the values −DC1 and −DC2, two threshold-limiter circuits which are active between the OV potential and the value −DC1 and −DC2, respectively and a threshold circuit which is active at lower values than the value −DC2, it being assumed that a limited peak-white value (instant t4) is applied.

In the parallel channel PC2 the video signal VS3 supplied by the amplifier A2 is applied to an input of a voltage comparator VC1 and to an input T3 of a voltage comparator VC2 via a resistor R14. A further input T7 of the voltage comparator VC1 is connected to an output of the voltage source UV which produces an adjustable direct voltage −DC1 (the threshold value mentioned earlier at the signal VS3). Likewise, a further input T2 of the voltage comparator VC2 is connected to the output of the voltage source UV, which output carries the adjustable direct voltage −DC2. The voltage comparators VC1 and VC2 each have two inversely related outputs designated T9, T10 and T11, T12, respectively. It is assumed that on the input T3 there is a voltage which is less negative than the voltage on the input T2, that is to say the voltage at the input T3 is positive relative to the voltage at the input T2, that the output T9 carries a high positive voltage which corresponds to a logic 1 and that the output T10 carries a low positive voltage which corresponds to the logic 0. The inputs T6 and T7 of the voltage comparator VC1 corresponds to the respective inputs T2 and T3 of the comparator VC2, the outputs T11 and T12 correspond to the outputs T9 and T10. Put differently, the varying voltage between the inputs T2, T3 and T6, T7, respectively is present in the inverted form as a constunt voltage between the outputs T9, T10 and T11, T12, respectively.

The output T9, T10, T11 and T12, respectively is connected to an input of a NAND-gate G1, G2, G3 and G4, respectively. A further input of each gate G1, G2, G3 and G4 is connected to a further output of the voltage source UV. The voltage comparator VC1 and the gates G3 and G4 form a voltage comparison circuit (VC1, G3, G4), the inputs of the gates G3 and G4 connected to the voltage source UV forming inputs T5 and T8 of this voltage comparison circuit. The same holds for a voltage comparison circuit (VC2, G1, G2) having inputs T1 and T4 which are connected to the gates G1 and G2. The voltage comparison circuits (VC2, G1, G2) and (VC1, G3, G4) each having two outputs T13, T14 and T15, T16, respectively connected to the gates incorporated therein are available as integrated circuits under the type designation NE 529 N of Signetics.

The voltage source UV supplies at the inputs T1, T4, T5 and T8, under the control of data received from the register REG and so from the microcomputer μC, combinations of a high positive voltage corresponding to a logic 1 and a low positive voltage corresponding to a logic 0. The predetermined combination determines, as will become apparent hereinafter, in conjunction with the threshold voltage values −DC1 on the input T7 and −DC2 on the input T2 which portions of the video signal VS3 applied to the inputs T3 and T6 are selected or suppressed in the threshold-limiter circuit provided in the parallel channel PC2. Applying a logic 0 to a gate G1, G2, G3 or G4 via the respective inputs T1, T4, T5 or T8 results in the path from the voltage comparator inputs to the respective outputs T13, T14, T15 or T16 being blocked.

The output T13 and T14, respectively of the circuit (VC2, G1, G2) is connected to a cathode of a diode D1 and D2, respectively, whose anodes are interconnected at a junction point T17 and via a resistor R15 to a terminal which carries a voltage +U. The terminal carrying the voltage +U forms part of a voltage source, not shown, a further terminal of which is connected to ground. The output T15 and T16, respectively of the comparator circuit (VC1, G3, G4) is connected to a cathode of a diode D3 and D4, respectively, the anodes of which are interconnected at a junction T18 and connected via a resistor R16 to a terminal which carries the voltage +U. The anodes of the diodes D1, D2 and D3, D4, respectively are connected to an anode of a diode D5 and D6, respectively, whose cathodes are interconnected at a junction T19. The diodes D1, D2 and D5 are biased via the resistor R15, the diodes D3, D4 and D6 being biased via the resistor R16. At the junction T19 of the diodes D5 and D6 a signal PS is shown as a function of the time t, such as is associated with the previously described signal VS4. The signal PS is a pulse-shaped signal which is supplied as an output signal by a pulse generator (UV; VC2, G1, G2, D1, D2, R15, D5; VC1, G3, G4, D3, D4, R16, D6) or, for the sake of brevity, pulse generator PG.

The junction T19 of the diodes D5 and D6, which junction forms the output of the pulse generator PG, is connected to the anode of a diode D7. The cathode of the diode D7 is connected to a resistor R17 and to a (−) input of a differential amplifier A6. By means of its other terminal the resistor R17 is connected to a coil L1, a further terminal of which is connected to the output of the amplifier A2 via a resistor R18. A centre tap of the coil L1 is connected to ground via a capacitor C3. The diode D7 and the resistor R17 form an adder circuit (D7, R17) to which the video signal VS3 is applied via a delay circuit (L1, C3, R18). The delay circuit (L1, C3, R18) serves to compensate for the delay occurring at the pulse-shaped signal PS relative to the video signal VS3. At the indicated instants t1, t2, t3 and t4 this delay is disregarded for the sake of simplicity.

The adder circuit (D7, R17) has its output connected to the (−) input of the amplifier A6. The (+) input of the amplifier A6 is connected to ground via a resistor R19, the amplifier output being connected via a diode D8 to the junction of a resistor R20 which is connected to ground and a resistor R21 connected to the (−) amplifier input. The said junction is connected to the terminal of the switch S2.

The amplifier A6, the diode D8 and the resistors R19, R20 and R21 form a half-wave rectifier circuit (A6, D8, R19, R20, R21) as only negative voltages at the (−) amplifier input result in a positive voltage on the cathode of the diode D8. A positive voltage at the (−) input of the amplifier A6 results in a negative amplifier output voltage, the diode D8 being non-conducting and the cathode thereof supplying the 0V ground potential. The rectifier circuit (A6, D8, R19, R20, R21) is then inoperative. Comparing the signals VS3, PS and VS4 shows that the positively-going pulses in the signal PS added to the signal VS3 put the rectifier circuit (A6, D8, R19, R20, R21) out of operation. The parallel channel PC2 thus comprises a threshold-limiter circuit (PG, A6, D8).

Before it is explained how the signal selection at the signal VS3 by means of inter alia the voltage source UV having the threshold values −DC1 and −DC2 is effected, further components present in the parallel channel PC2 will be described. The cathodes of the diodes D5 and D6 which are interconnected at the junction T19 are connected to the cathode of a diode D9. The anode of the diode D9 is connected to the cathode of a diode D10, whose anode is connected via a resistor R22 to an input terminal TPT to which a test pattern signal is applied. The anode of the diode D10 is connected to the anode of a diode D11 whose cathode is connected to an output T0 of the voltage source UV. When the voltage source UV supplies the ground potential or a negative voltage on the output T0 and, for example, a positive voltage is applied to the terminal TPT, the diode D11 conducts and the diodes D9 and D10 are cutoff. The signal PS is applied without being disturbed to the junction T19 via the diodes D5 and D6. If, however, it is desired that the pulse generator PG is switched off and to use for signal selection a signal which is to be applied externally to the terminal TPT, then this can be effected by adjusting the threshold values −DC1 and −DC2 to the maximum negative value and to supply an adequate positive voltage from the output T0. In this situation the diode D11 is non-conductive and the signal applied to the terminal TPT via the conducting diodes D10 and D9 may result in pulses in the signal PS at the junction T19, the diodes D5 and D6 being non-conducting. This selection feature can be utilized when an electronically generated test pattern is used instead of an optically produced test pattern.

To explain the signal selection by means of the pulse generator PG the following Table applies.

### TABLE 1
The variation of the signal VS3 relative to the threshold values −DC1 and −DC2 and the resulting logic values

|  | T3 | T6 | T9 | T10 | T11 | T12 |
|---|---|---|---|---|---|---|
| 0/VS3/−DC1 | H | H | 1 | 0 | 0 | 1 |
| −DC1/VS3/−DC2 | H | L | 1 | 0 | 1 | 0 |
| −DC2/VS3 | L | L | 0 | 1 | 1 | 0 |

wherein
H signifies a less negative voltage and L a more negative voltage relative to the threshold value.

### TABLE 2
Four selection codes and their results.

| 1 | | | | 2 | | | | 3 | | | | 4 | | | |
|---|---|---|---|---|---|---|---|---|---|---|---|---|---|---|---|
| T1 | T4 | T5 | T8 | T1 | T4 | T5 | T8 | T1 | T4 | T5 | T8 | T1 | T4 | T5 | T8 |
| 1 | 0 | 0 | 1 | 1 | 0 | 1 | 0 | 0 | 1 | 1 | 0 | 1 | 0 | 1 | 1 |
| T13 | T14 | T15 | T16 | T13 | T14 | T15 | T16 | T13 | T14 | T15 | T16 | T13 | T14 | T15 | T16 |
| 0 | 1 | 1 | 0 | 0 | 1 | 1 | 1 | 1 | 1 | 1 | 1 | 0 | 1 | 1 | 0 |
| 0 | 1 | 1 | 1 | 0 | 1 | 0 | 1 | 1 | 1 | 0 | 1 | 0 | 1 | 0 | 1 |
| 1 | 1 | 1 | 1 | 1 | 1 | 0 | 1 | 1 | 0 | 0 | 1 | 1 | 1 | 0 | 1 |
| T17 | | T18 | | T17 | | T18 | | T17 | | T18 | | T17 | | T18 | |
| 0 | | 0 | | 0 | | 1 | | 1 | | 1 | | 0 | | 0 | |
| 0 | | 1 | | 0 | | 0 | | 1 | | 0 | | 0 | | 0 | |
| 1 | | 1 | | 1 | | 0 | | 0 | | 0 | | 1 | | 0 | |
| T19 | | | | T19 | | | | T19 | | | | T19 | | | |
| 0 | | | | 1 | | | | 1 | | | | 0 | | | |
| 1 | | | | 0 | | | | 1 | | | | 0 | | | |
| 1 | | | | 1 | | | | 0 | | | | 1 | | | |

The biased diodes D1, D2 and D3, D4, respectively correspond to a logic OR-function which also holds for the diodes D5 and D6.

From Table 2, which shows the selection codes and their results, it follows that at the code 1 a positive pulse would occur in the signal PS (point T19) from the instant t2 to the instant t4. This results in the rectifier circuit (A6, D8, R19, R20, R21) allowing the video signal VS3 to pass only at signal values which are less negative than the threshold value −DC1.

The code 2 results in two positive pulses, more specifically between the instants t1 and t2, and t3 and t4. The shown signal PS corresponds therewith. Only video signal values located between the threshold values −DC1 and −DC2 are allowed to pass.

The code 3 would result in a positive pulse in the signal PS (point T19) between the instants t1 and t3. Now only video signal values are allowed to pass which are more negative than the threshold value −DC2.

The code 4 would result in a positive pulse in the signal PS (point T19) from the instant t3 onwards. A11 video signal values less negative than the threshold value −DC2 are then allowed to pass.

In addition to the described gamma correction during the setting-up, the parallel channel PC2 may further be utilized by means of the described signal selection for adjusting shading errors at specifically the black level and the peak-white value. To this end an optical test pattern is used, having black and white blocks, for example in the form of a chess board pattern. A uniform illumination of this test pattern and recording thereof by the pick-up device in the signal source VSS results in a video signal VS2 which on display would show this black-white pattern. From the signal VS3 corresponding therewith, which signal is not shown, which has alternately the black-white information, it is only possible when selection in accordance with code 1 (Table 2) is effected to measure the information at the black level. When selection is effected in accordance with the code 3 (Table 2) only the information at the peak-white values is measured. The code change-over from the microcomputer μC is sufficient to perform those adjustments, without the necessity of an adaptation for the shading measurement at the black level in an optical path at the pick-up device in the source VSS.

When the said test pattern with the black and white blocks is elaborated by gray blocks, it is possible to adjust a desired gamma correction by means of a signal selection based on these grey blocks. These grey blocks may be provided, for example, around the centre of the chess board pattern.

The parallel channel PC3 is suitable for adjusting the optical and electronic focusing, adjustment being made until a maximum of high-frequency detail is obtained on display, by measuring a high-frequency component in the video signal VS3. The output of the amplifier A2 carrying the video signal VS3 is connected to a terminal of a resistor R23. The other terminal of the resistor R23 is connected to ground via a capacitor C4 arranged in series with a resistor R24. The junction between the capacitor C4 and the resistor R24 is connected to ground via a capacitor C5 and a series resistor R25, the junction between this capacitor and series resistor being connected to a terminal of the switch S3. The other terminal of the switch S3 and terminals of the switches S4 and S5 incorporated in the respective parallel channels PC4 and PC5 connected thereto are connected to an input of a rectifier circuit RECT the output of which is connected to a terminal of the switch S345. The circuit RECT forms part of the parallel channel PC345 which is common to the parallel channels PC3, PC4 and PC5. The rectifier circuit RECT is in the form of a full-wave rectifier circuit, whereby advantageously a measuring data increase is obtained at all three parallel channels PC3, PC4 and PC5 in association always with the channel PC345.

The transfer characteristic of the parallel channel PC3 is predominantly determined by a high-pass filter (C4, R24, C5, R25). In practice it has been found that a 12 dB-per-octave filter characteristic is very satisfactory for focus measurement. The following values may be chosen for such a filter; capacitors C4 and C5 equal to 1.5 nF and resistors R24 and R25 equal to 1000 Ohm. As there are also matching and isolating resistors, not further described, the resistor R23 is a 75 Ohm matching resistor. The analogue transfer characteristic of the parallel channel (PC3, PC345) for the focusing adjustment is predominantly determined by the high-pass filter (C4, R24, C5, R25) and the subsequant (full-wave rectifier circuit RECT).

The parallel channel (PC4, PC345) is intended for a raster registration correction for which purpose the signal VS3 to be applied to it is a difference signal between two colour signals or between a colour signal and an (other) reference signal. The switches S4 and S345 are then in the closed condition. The output signal VS3 of the amplifier A2 is applied to a series arrangement of a capacitor C6, a resistor R27 and a switch SC2 via a matching resistor R26. The junction of the capacitor C6 and the resistor R27 is connected to a terminal of the switch S4. The switch SC2 switches line periodically under the control of the line blanking signal HBS, the switch SC2 being in the switched-on condition during line scanning periods and in the switched-off condition in line blanking periods. As a result thereof signal edges which may occur in the (video) line blanking periods do not affect the raster registration measurement. During the raster registration adjustment, adjustment is effected until a minimum measuring value has been obtained as the reference value. The parallel channel PC4 then has a transfer characteristic which is predominently determined by a differentiating circuit (C6, R27, SC2). In practice it has been found that a differentiating circuit is very satisfactory when the following values are chosen: Capacitor C6 equal to 0.22 μF and resistor R27 equal to 1000 Ohm. The time constant of the differentiating circuit is equal to 220 μs, which value is of the order of magnitude of some line periods (for example a line period of 64 μs) and which has been found to be very satisfactory in practice. A switch of the Philips type HEF 4066 B may be chosen for the switch SC2.

The parallel channel (PC5, PC345) is provided to enable a measurement of the degree to which the chrominance subcarrier is present in a luminance signal VS3 applied thereto. To that end the output of the amplifier A2 is connected to an input of a bandpass filter F1 which is tuned to the chrominance subcarrier frequency. The construction of the filter F1 is not further described and it may consist of two parallel-arranged filters, one tuned to the NTSC-chrominance sub-carrier frequency and the other one to the PAL-chrominance subcarrier frequency. The filter F1 is followed by, for example, a 20 dB-amplifier A7, the output of which is connected to the switch S5. The transfer characteristic of the parallel channel PC5 is here predominantly determined by the filter characteristic of the filter F1, the rectifier RECT contributing in the channel (PC5, R345) to the transfer characteristic. During the adjustment is effected until a minimal measuring value has been obtained as the reference value.

From the preceding it appears that the parallel channels PC1, PC2 and PC3, PC4, PC5 in association with the channel PC345 each have a specific, analogue transfer characteristic which results in an error value to be measured which is characteristic of the type of correction to be performed. Summarizing the above, they are the conveyance of a non-processed signal for the shading correction (PC1), the signal level selection (PC2) for gamma correction and shading correction at black level and peak-white value, the high-frequency filter characteristic (PC3) for focusing, the signal differentiation (PC4) for the raster registration and the chrominance subcarrier filtering (PC5) for the minimalization thereof.

Instead of arranging the change-over switch (S1, S2, S345, S3, S4, S5) in the specified place thoughts may go towards a change-over switch subsequent to the amplifier A2 and having five switching contacts for the respective parallel channels PC1, PC2, PC3, PC4 and PC5.

## Claims

1. A setting-up system for a television camera, the system comprising a signal source (VSS) incorporating a television pick-up device for producing at least one video signal (VS), also comprising a signal processing circuit (PC) and a subsequent digital error measuring circuit (EMC) for determining in association with a microcomputer (µC) error values between the average value of a signal applied thereto taken over distinct sub-areas of a television picture and a reference value, the microcomputer (µC) comprising at least one digital store (M) having separate store locations (m) for storing digital correction values corresponding to minimal error values and being associated with the sub-areas, and a signal correction circuit (CC) for effecting, while digital correction values are applied, a signal correction resulting in a video signal corrected for each sub-area, characterized in that the signal processing circuit (PC) which precedes the digital error measuring circuit (EMC) incorporates a plurality of parallel channels (PC1, PC2, PC3, PC4, PC5) each having a different, analogue, signal transfer characteristic, these parallel channels being selectively connected via a change-over switch (S1, S2, S345, S3, S4, S5) to the digital error measuring circuit (EMC) which incorporates a digital error measuring channel which is common to the parallel channels.

2. A setting-up system as claimed in Claim 1, suitable for a colour television camera, the setting-up relating to raster registration correction for televison line rasters between a reference raster corresponding to a reference signal and a raster corresponding to a camera video signal, for which purpose a difference signal which represents the difference between the reference signal and the video signal is adjusted to a minimum, characterized in that the parallel channel (PC4) suitable for that purpose in the signal processing circuit (PC) has a transfer characteristic which is determined by a signal differentiating circuit (C6, R27, SC2) which during line scanning periods is switched-on by means of a switch (SC2) provided therein and is switched off during line blanking periods, and by a subsequent rectifier circuit (RECT).

3. A setting-up system as claimed in Claim 2, characterized in that the time constant of the signal differentiating circuit (C6, R27, SC2) corresponds to a plurality of line periods.

4. A setting-up system as claimed in Claim 1, characterized in that for effecting a focusing correction the parallel channel (PC3) suitable for that purpose in the signal processing circuit (PC) has a transfer characteristic which is determined by a high-pass filter (C4, R24, C5, R25) and by a subsequent rectifier circuit (RECT).

5. A setting-up system as claimed in Claim 4, characterized in that the high-pass filter (C4, R24, C5, R25) has a 12dB-per octave filter characteristic.

6. A setting-up system as claimed in Claim 1, suitable for a colour television camera, characterized in that to obtain a minimal presence of a chrominance subcarrier in a luminance signal the parallel channel (PC5) suitable for a measurement thereof incorporated in the signal processing circuit (PC) has a transfer charcteristic which is determined by a bandpass filter (F1) tuned to the chrominance subcarrier frequency and by a subsequent rectifier circuit (RECT).

7. A setting-up system as claimed in Claim 2, 4 or 6, characterized in that the said rectifier circuit (RECT) is a full-wave rectifier circuit.

8. A setting-up system as claimed in Claim 1, characterized in that for effecting a measurement at a video signal level to be selected the parallel channel (PC2) suitable for that purpose in the signal processing circuit (PC) has a transfer characteristic which is determined by a threshold-limiter circuit (PG, UV, VC1, VC2, G1, G2, G3, G4).

9. A setting up system as claimed in Claim 8, characterized in that the threshold-limiter circuit comprises a pulse generator (PG) having an input (T3, T6) to which the video signal (VS3) to be measured is applied and an output (T19) for supplying pulses (PS) when the instantaneous video signal value has a certain offset from the selected level (−DC1, −DC2), the output (T19) being connected to an input of an adder circuit (D7, R17) having a further input to which the video signal (VS3) is applied and an output connected to an input of a half-wave rectifier circuit (A6, D8, R19, R20, R21) the output of which for carrying a suppressed video signal (VS4) during the pulses is connected to the digital error measuring channel (EMC).

10. A setting-up system as claimed in Claim 9, characterized in that the pulse generator (PG) comprises two voltage comparison circuits (VC1, VC2) each having a first and a second output (T9, T10, T11, T12), a first and a second input (T3, T6) to which respective voltages to be compared are applied and a third and a fourth input (T2, T7) to which voltages may be applied which block the voltage comparison circuit(s) (VC1, VC2) between the first and second inputs and the first and second outputs, respectively, a first or a second input (T3, T6), respectively of each voltage comparison circuit (VC1, VC2) being coupled to the said input (PC2) of the pulse generator (PG) and the remaining inputs (T2, T7) to the microcomputer (µC) whilst the outputs of the voltage comparison circuits (VC1, VC2) are coupled to each other via diodes (D1, D2, D3, D4) which are separately biased for each voltage comparison circuit (VC1, VC2) and coupled to the input of the rectifier circuit (A6, D8, R19, R20, R21) via a further diode (D7) incorporated in the adder circuit (D7, R17).

**Patentansprüche**

1. Einstellsystem für eine Fernsehkamera, wobei das System mit einer eine Fernsehaufnahmeanordnung aufweisenden Signalquelle (VSS) zum Leifern mindestens eines Videosignals (VS), einer Signalverarbeitungsschaltung (PC) und einer nachgeschalteten digitalen Fehlermessschaltung (EMC) zum in Zusammenarbeit mit einem Mikrocomputer (µC) Bestimmen von Fehlerwerten zwischen dem Mittelwert eines demselben zugeführten Signals, genommen über mehrere Teilgebiete eines Fernsehbildes und einem Bezugswert, ausgebildet ist, wobei der Mikrocomputer (µC) mit mindestens einem Digitalspeicher (M) versehen ist, der mit einzelnen Speicherherstellen (m) zur Speicherung der minimalen Fehlerwerten entsprechenden digitalen Korrekturwerte, die zu den Teilgebieten gehören, ausgebildet ist, sowie mit einer Signalkorrekturschaltung (CC) zum unter Zuführung der digitalen Korrekturwerte Durchführen einer Signalkorrektur, die zu einem je Teilgebiet korrigierten Video-Signal führt, dadurch gekennzeichnet, dass die der digitalen Fehlermessschaltung (EMC) vorgeschaltete Verarbeitungsschaltung (PC) mit mehreren Parallelkanälen (PC1, PC2, PC3, PC4, PC5) ausgebildet ist, die jeweils eine unterschiedliche analoge Signalübertragungscharakteristik haben und dass die Parallelkanäle über einen Umschalter (S1, S2, S345, S3, S4, S5) an die digitale Fehlermessschaltung (EMC), die mit einem den Parallelkanälen gemeinsamen digitalen Fehlermesskanal ausgebildet ist, beliebig anschliessbar sind.

2. Einstellsystem nach Anspruch 1, geeignet für eine Farbfernsehkamera, wobei die Einstellung sich auf eine Rasterdeckungskorrektur bei Fernsehzeilenrastern zwischen einem einem Bezugssignal entsprechenden Bezugsraster und einem einem Kamera-Video-Signal entsprechenden Raster bezieht, wozu ein Differenzsignal zwischen dem Bezugssignal und dem Video-Signal auf ein Minimum eingestellt wird, dadurch gekennzeichnet, dass der dazu geeignete Parallelkanal (PC4) in der Signalverarbeitungsschaltung (PC) eine Übertragungskennlinie hat, die durch eine Signaldifferenzierschaltung (C6, R27, SC2) bestimmt ist, die über einen darin vorhandenen Schalter (SC2) während Horizontal-Abtastzeitdauern eingeschaltet und während Horizontal-Austastzeitdauern ausgeschaltet ist und durch eine nachgeschaltete Gleichrichterschaltung (RECT) bestimmt ist.

3. Einstellsystem nach Anspruch 2, dadurch gekennzeichnet, dass die Zeitkonstante der Signaldifferenzierschaltung (C6, R27, SC2) in der Grössenordnung von einigen horizontal-Perioden liegt.

4. Einstellsystem nach Anspruch 1, dadurch gekennzeichnet, dass zum Durchführen einer Fokuskorrektur der dazu geeignete Parallelkanal (PC3) in der Signalverarbeitungsschaltung (PC) eine Übertragungskennlinie hat, die durch ein Hochpassfilter (C4, R24, C5, R25) und eine nachfolgende Gleichrichterschaltung (RECT) bestimmt ist.

5. Einstellsystem nach Anspruch 4, dadurch gekennzeichnet, dass das Hochpassfilter (C4, R24, C5, R25) eine 12 dB-je-Oktave-Filterkennlinie aufweist.

6. Einstellsysten nach Anspruch 1, geeignet für eine Farbfernsehkamera, dadurch gekennzeichnet, dass zum Erhalten eines minimal vorhandenen Farbhilfsträgers in einem Leuchtdichtesignal der zur Messung desselben geeignete Parallelkanal (PC5) in der Signalverarbeitungsschaltung (PC) eine Übertragungskennlinie aufweist, die durch ein auf die Farbhilfsträgerfrequenz abgestimmtes Bandpassfilter (F1) und durch eine nachgeschaltete Gleichrichterschaltung (RECT) bestimmt ist.

7. Einstellsystem nach Anspruch 2, 4 oder 6, dadurch gekennzeichnet, dass die genannte Gleichrichterschaltung (RECT) eine Zweiweggleichrichterschaltung ist.

8. Einstellsystem nach Anspruch 1, dadurch gekennzeichnet, dass zum Durchführen einer Messung bei einem zu selektierenden Video-Signalpegel der dazu geeignete Parallelkanal (PC2) in der Signalverarbeitungsschaltung (PC) eine Übertragungskennlinie aufweist, die durch eine Schwellenbegrenzungsschaltung (PG, UV, VC1, VC2, G1, G2, G3, G4) bestimmt ist.

9. Einstellsystem nach Anspruch 8, dadurch gekennzeichnet, dass die Schwellenbegrenzungsschaltung einen Impulsgenerator (PG) aufweist mit einem Eingang (T3, T6), dem das zu messende Video-Signal (VS3) zugeführt wird und einem Ausgang (T19), der Impulse (PS) liefert, wenn der augenblickliche Video-Signalwert eine bestimmte Abweichung von dem selektierten Pegel (−DC1, −DC2) aufweist und dass der Ausgang (T19) mit einem Eingang einer Addierschaltung (D7, R17) verbunden ist, die einen weiteren Eingang aufweist, dem das Video-Signal (VS3) zugeführt wird und einen Ausgang, der mit einem Eingang einer Einweggleichrichterschaltung (A6, D8, R19, R20, R21) verbunden ist, deren Ausgang mit dem ausgetasteten Video-Signal (VS4) während der Impulse mit dem digitalen Fehlermesskanal (EMC) verbunden ist.

10. Einstellsystem nach Anspruch 9, dadurch gekennzeichnet, dass der Impulsgenerator (PG) zwei Spannungsvergleichsschaltung (VC1, VC2) aufweist, die jeweils mit einem ersten und einem zweiten Ausgang (T9, T10, T11, T12) mit einem ersten und einem zweiten Eingang (T3, T6) zum Zuführen zweier zu vergleichender Spannungen und mit einem dritten und einem vierten Eingang (T2, T7) zum Zuführen von die Spannungsvergleichsschaltungen (VC1, VC2) zwischen den ersten und zweiten Eingängen und den ersten bzw. zweiten Ausgang sperrenden Spannungen versehen sind und dass von jeder Spannungsvergleichsschaltung (VC1, VC2) ein erster oder zweiter Eingang (T3, T6) mit dem genannten Eingang (PC2) des Impulsegenerators (PG) und die restlichen Eingänge (T2, T7) mit dem Mikrocomputer (µC) gekoppelt sind und die Ausgänge der Spannungsvergleichsschaltungen (VC1, VC2) über je Spannungsvergleichsschaltung (VC1, VC2) einzeln vorgespannte Dioden (D1, D2, D3, D4) miteinander verbunden sind und über eine weitere Diode (D7) in der Addierschaltung (D7, R17) mit dem Eingang der Gleichrichterschaltung (A6, D8, R19, R20, R21) verbunden sind.

## Revendications

1. Système de réglage pour une caméra de télévision, système qui est équipé d'une source de signaux (V55) présentant un dispositif de prise de vues de télévision afin de produire au moins un signal vidéo (V5), d'un circuit de traitement de signal (PC) et d'un circuit de mesure de défaut numérique subséquent (EMC) pour déterminer, en coopération avec un microordinateur (µC), des valeurs de défaut entre la valeur moyenne d'un signal qui y est appliqué, concernant des régions partielles distinctes d'une image de télévision et une valeur de référence, le micro-ordinateur (µC) étant muni d'au moins une mémoire numérique (M) présentant des emplacements de mémoire séparés (m) pour le stockage de valeurs de correction numériques correspondant à des valeurs de défaut minimales et étant associés aux régions partielles, et d'un circuit de correction de signal (CC), afin d'effectuer, avec apport de valeurs de correction numériques, une correction de signal qui aboutit à un signal de vidéo corrigé par région partielle, caractérisé en ce que le circuit de traitement de signaux (PC), qui précède le circuit de mesure de défaut numérique EMC, présente un pluralité de canaux parallèles (PC1, PC2, PC3, PC4, PC5) ayant chacun une caractéristique de transmission de signaux analogique différente, canaux parallèles qui sont connectés sélectivement par l'intermédiaire d'un commutateur (S1, S2, S345, S3, S4, S5) au circuit de mesure de défaut numérique (EMC) qui est muni d'un canal de mesure de défaut numérique commun aux canaux parallèles.

2. Système de réglage selon la revendication 1, convenant à une caméra de télévision en couleurs, réglage qui concerne la correction d'enregistrement de trame pour des trames de lignes de télévision, entre une trame de référence correpondant à un signal de référence et une trame correspondant à un signal vidéo de caméra, pour lequel et dans le but qu'un signal de différence représentant la différence entre le signal de référence et le signal vidéo soit réglé à un minimum, caractérisé en ce que le canal parallèle (PC4) convenant à ce but dans le circuit de traitement de signal (PC) présente une caractéristique de transmission, qui est déterminée par un circuit différenciateur de signal (C6, R27, SC2), qui est enclenché dans la période de balayage de ligne par l'intermédiaire d'un commutateur (SC2) dont il est muni et qui est déclenché pendant la période de suppression de ligne, et par un circuit redresseur subséquent (RECT).

3. Système de réglage selon la revendication 2, caractérisé en ce que la constante de temps du circuit différenciateur de signal (C6, R27, SC2) correspond à une pluralité de périodes de ligne.

4. Système de réglage selon la revendication 1, caractérisé en ce que pour effectuer une correction de focalisation, le canal parallèle (PC3) convenant à ce but dans le circuit de traitement de signal (PC) présente une caractéristique de transmission, qui est déterminée par un filtre passe-haut (C4, R24, C5, R25) et un circuit redresseur subséquent (RECT).

5. Système de réglage selon la revendication 4, caractérisé en ce que le filtre passe-haut (C4, R24, C5, R25) présente une caractéristique de filtrage à 12 dB par octave.

6. Système de réglage selon la revendication 1, convenant à une caméra de télévision en couleurs, caractérisé en ce que pour obtenir une présence minimal d'une onde porteuse de chrominance dans un signal de luminance, le canal parallèle (PC5) approprié à ce but dans le circuit de traitement de signaux (PC), présente une caractéristique de transmission qui est déterminée par un filtre passebande (F1) accordé à la fréquence d'onde de chrominance et par un circuit redresseur subséquent (RECT).

7. Système de réglage selon la revendication 2, 4 ou 6, caractérisé en ce que ledit circuit redresseur (RECT) est un circuit redresseur à deux alternances.

8. Système de réglage selon la revendication 1, caractérisé en ce que pour effectuer une mesure à un niveau de signal vidéo à sélectionner, le canal parallèle (PC2) approprié à ce but dans le circuit de traitement de signaux (PC) présente une caractéristique de transmission, qui est déterminée par un circuit limiteur de seuil (PG, UV, VC1, VC2, G1, G2, G3, G4).

9. Système de réglage selon la revendication 8, caractérisé en ce que le circuit limiteur de seuil comporte un générateur d'impulsions (PG) présentant une entrée (T3, T6) à laquelle est appliqué le signal vidéo (VS3) à mesurer et une sortie (T19) pour délivrer des impulsions (P5) lorsque la valeur de signal vidéo instantanée présente un certain écart par rapport au niveau sélectionné (−DC1, −DC2), la sortie (T19) étant connectée à une entrée d'un circuit additionneur (D7, D17) présentant une autre entrée à laquelle est appliqué le signal vidéo (V53) et une sortie qui est connectée à une entrée d'un circuit redresseur à une alternance (A6, D8, R19, R20, R21) dont la sortie présentant un signal vidéo supprimé (VS4) pendant les impulsions est connectée au canal de mesure de défaut numérique (EMC).

10. Système de réglage selon la revendication 9, caractérisé en ce que le générateur d'impulsions (PG) comporte deux circuits de comparaison de tension (VC1, VC2), chacun présentant une première sortie et une deuxième sortie (T9, T10, T11, T12), une première entrée et une deuxième entrée (T3, T6), auxquelles sont appliquées les tensions respectives à comparer et une troisième entrée et une quatrième entrée, (T2, T7) auxquelles peuvent être appliquées les tensions assurant le blocage du ou des circuit(s) de comparaison de tension (VC1, VC2) entre les première et deuxième entrées et les première et deuxième sorties respectivement, une première entrée ou une deuxième entrée (T3, T6) respectivement de chaque circuit de comparaison de tension (VC1, VC2) étant couplée à ladite entrée (PC2) du générateur d'impulsions (PG) et les autres entrées (T2, T7) au micro-ordinateur (μG), alors que les sorties des circuits de comparaison de tension (VC1, VC2) sont couplées entre elles par l'intermédiaire de diodes (D1, D2, D3, D4), qui sont séparément polarisées pour chaque circuit de comparaison de tension (VC1, VC2) et couplées à l'entrée du circuit redresseur (A6, D8, R19, R20, R21) par l'intermédiaire d'une autre diode (D7) prévue dans le circuit additionneur (D9, R17).

1